(19) Europäisches Patentamt

European Patent Office

Office européen des brevets

(11) **EP 1 033 869 B1**

## (12) EUROPÄISCHE PATENTSCHRIFT

(45) Veröffentlichungstag und Bekanntmachung des Hinweises auf die Patenterteilung:
**05.06.2002 Patentblatt 2002/23**

(51) Int Cl.⁷: $H04N\ 5/217$

(21) Anmeldenummer: **00104158.1**

(22) Anmeldetag: **29.02.2000**

(54) **Verfahren zur Gewinnung eines elektronischen Sucherbildes für eine digitale Stehbildkamera**

Method for generating an electronic viewer picture for digital still picture camera

Méthode de génération d'une image éléctronique d'un viseur pour caméra digitale à image fixe

(84) Benannte Vertragsstaaten:
**BE CH DE DK FR GB**

(30) Priorität: **02.03.1999 DE 19909076**

(43) Veröffentlichungstag der Anmeldung:
**06.09.2000 Patentblatt 2000/36**

(73) Patentinhaber: **LENZ, Reimar**
**80801 München (DE)**

(72) Erfinder: **LENZ, Reimar**
**80801 München (DE)**

(74) Vertreter: **Klunker . Schmitt-Nilson . Hirsch**
**Winzererstrasse 106**
**80797 München (DE)**

(56) Entgegenhaltungen:
EP-A- 0 777 380          EP-A- 0 840 503
WO-A-95/15054           WO-A-97/01238
DE-A- 3 821 705         US-A- 4 876 590
US-A- 5 563 658

**Beschreibung**

Die Erfindung betrifft ein Verfahren zur Gewinnung eines elektronischen Sucherbildes für eine digitale Stehbildkamera mit einem flächigen Full-Frame-Transfer-CCD-Sensor. Die Erfindung betrifft außerdem eine Digitalkamera, in der das Verfahren zum Einsatz kommt.

Technischer Hintergrund

Während bei konventionellen, photochemischen Kameras der jeweils verwendete Schwarz/Weiß- oder Farbfilm nur einmal verwendbar ist, gelangen bei Digitalkameras CCD-Sensoren zum Einsatz. Ähnlich wie bei einer Videokamera liefern diese CCD-Sensoren Bildinformation von einzelnen Bildpunkten oder Pixeln. Diese Bildinformation steht unmittelbar nach der Belichtung zur Verfügung, läßt sich mit Datenverarbeitungsmethoden verarbeiten, kann abgespeichert und gelöscht werden. Es gibt verschiedene Typen von CCD-Sensoren, worauf weiter unten noch eingegangen werden soll.

Bei Digitalkameras stellt der CCD-Sensor das teuerste Einzelteil des Geräts dar. Es gilt die Regel, daß der Preis der Kamera etwa entsprechend dem Bildauflösungsvermögen der Digitalkamera steigt. Das Bildauflösungsvermögen der Kamera entspricht der Anzahl von Zeilen und Spalten der matrixförmig angeordneten Pixel des CCD-Sensors. Hieraus folgt, daß aufgrund des hohen Preises hochauflösende Digitalkameras nur als Fach- oder Profikameras zur Verfügung stehen.

Die vorliegende Erfindung steht in engem Zusammenhang mit den Einstellmaßnahmen vor der eigentlichen Bildaufnahme.

Genau wie bei den konventionellen, photochechmischen Kameras möchte man bei Digitalkameras sichergehen, daß die Aufnahme den eigenen Vorstellungen möglichst genau entspricht. Zu den Einstellarbeiten gehört die Auswahl des Bildausschnitts, die Fokussierung und die Einstellung der Bildhelligkeit. Bei Kompaktkameras steht hierzu der Sucher oder ein zweites "Auge" zur Verfügung, bei Spiegelreflexkameras befindet sich vor der Filmbildebene ein einklappbarer Spiegel, so daß das Bild auf eine Suchermattscheibe gelenkt wird, bei Großbild- oder Fachkameras wird an die Stelle des Films eine Mattscheibe eingesetzt.

Bei Digitalkameras bietet sich nun an, die von dem CCD-Sensor gelieferte Bildinformation auf einem kleinen Monitor darzustellen, zum Beispiel einer Flüssigkristallanzeige (LCD-Element) oder einer Mini-Kathodenstrahlröhre mit Lupe. Diese Art der Aufnahmeszenen-Betrachtung ist von Videokameras und auch von Digitalkameras geringer Auflösung bekannt. Der Vorteil liegt darin, daß die Einstellarbeiten und auch die eigentliche Bildaufnahme mit derselben Bilderzeugungseinrichtung erfolgen. Dies bietet eine Reihe von Vorteilen: identische Fokusebene bei der vorbereitenden Einstellung der Kamera und bei der eigentlichen Bildaufnahme, sofortiges Erkennen einer Unter- oder Überbelichtung etc.

Die oben angesprochenen Vorteile lassen sich unmittelbar nutzen, wenn der in der Digitalkamera verwendete CCD-Sensor entweder ein Interline-Transfer-CCD-Sensor (IT-Sensor) oder ein Frame-Transfer-CCD-Sensor (FT-Sensor) ist; denn diese Typen von CCD-Sensoren besitzen zusätzlich zu den den Pixeln entsprechenden photoelektrischen Bildwandlerelementen eine separate Speicherzone. Bei den IT-Sensoren befindet sich die zusätzliche Bildspeicherzone zwischen den einzelnen Spalten, bei FT-Sensoren befindet sich die Bildspeicherzone zwischen der lichtempfindlichen Pixel-Matrix und dem Ausleseregister unterhalb der Pixel-Matrix.

Aufgrund der separaten Bildspeicherzonen benötigen IT-Sensoren und FT-Sensoren keinen optischen Verschluß, der die lichtempfindliche Pixel-Matrix zwischen den einzelnen Belichtungszeiten vor einfallendem Licht schützt. Aufgrund der Bildspeicherzonen benötigen diese IT- und FT-Sensoren relativ viel Chipfläche, und demgemäß ist die Anzahl der Pixel solcher Sensoren relativ stark eingeschränkt (typischerweise auf einen Wert von ca. 2 Mio. Pixeln).

Die relativ starke Beschränkung der Anzahl der Pixel bei IT- oder FT-Sensoren macht diese Sensoren für professionelle digitale Kameras in der Regel ungeeignet. Aus diesem Grund werden bei Profi-Digitalkameras durchwegs sogenannte Full-Frame-Transfer-CCD(-Sensoren)(FF-Sensoren) eingesetzt. Für Profi-Digitalkameras wird eine hohe Bildauflösung gefordert, entsprechend mindestens 4 Mio. Pixeln in Verbindung mit einer großen Bildfläche. Aus den genannten baulichen Gründen sind IT-Sensoren und FT-Sensoren mit einer so großen Anzahl von Pixeln in der Praxis nicht verfügbar; deshalb verwendet man durchwegs FF-Sensoren, auch wenn die FF-Sensoren nur unter Inkaufnahme von zusätzlichen Maßnahmen zur Erzeugung eines "Sucherbildes" genutzt werden können, also zur Erzeugung eines Bildes, mit dessen Hilfe die Einstellarbeiten vor der eigentlichen Bildaufnahme vorgenommen werden können.

Bei FF-Sensoren erfolgt das Auslesen der Bildinformation mangels separater Bildspeicherzone durch Verschieben der Ladungen aus den einzelnen Bildwandlerelementen in das unter der untersten Zeile der Pixel-Matrix befindliche Ausleseregister. Damit während der Auslesezeit kein Licht auf den CCD-Sensor fällt, wird bei derzeitigen professionellen Digitalkameras mit einem optischen Verschluß vor dem CCD-Sensor gearbeitet. Ein optischer Verschluß bietet sich insbesondere bei solchen Kameras an, die durch Umbau von Spiegelreflexkameras und Fachkameras hergestellt werden. Um professionelle digitale Aufnahmen zu machen, ersetzt man die Filmmagazine herkömmlicher Spiegelreflexkameras oder Fachkameras durch ein digitales Kamera-Rückteil (digital camera back).

Es ist gängige Meinung, daß bei Digitalkameras mit FF-Sensoren, also professionellen Digitalkameras, der FF-Sensor nicht ohne optischen Verschluß zum Erzeugen eines "Sucherbildes" genutzt werden kann. Dies hat im wesentlichen zwei Gründe:

1. Bei FF-Sensoren werden die lichtempfindlichen Wandlerelemente nicht nur für die eigentliche Bildaufnahme, sondern auch für den Ladungstransport während des Auslesens verwendet. Wäre der Kameraverschluß auch vor oder nach der Bildaufnahme geöffnet - damit der CCD-Sensor die Bildinformation für das "Sucherbild" empfangen kann -, so entstünde ein verschmiertes oder verwischtes Bild - ganz ähnlich, als würde man einen unbelichteten chemischen Film bei geöffnetem Verschluß schnell in den Bildbereich ziehen, ihn dort während der Dauer der Belichtungszeit verweilen lassen und danach wieder schnell herausziehen. Es ergäbe sich ein unbrauchbares Bild. Bei einer Digitalkamera, die einen Sensor mit 4 Mio. Pixeln enthält, dauert die Zeit für das Auslesen der Bildinformation etwa 0,5 Sekunden, was einem Vielfachen der gewünschten Belichtungszeit entspricht. Die störenden Verschmier- oder Verwischanteile wären also um ein Mehrfaches höher als die in der eigentlichen Belichtungszeit anfallenden Bildinformationsanteile. Man könnte nun daran denken, den Kameraverschluß nicht nur für den eigentlichen Bildaufnahmevorgang einzusetzen, sondern auch vor der Bildaufnahme, um das "Sucherbild" zu gewinnen. Diese Lösung scheidet aber aufgrund eines zu hohen Verschleißes des Kameraverschlusses und der erheblichen Geräuschentwicklung aus.

2. Bei der manuellen Fokussierung ist eine möglichst hohe Bildwiederholrate erforderlich, für angenehmes Arbeiten mindestens fünf Bilder pro Sekunde. Da - wie erwähnt - das normale Auslesen bei großen Farb-FF-Sensoren circa 0,5 Sekunden dauert, sind jedoch selbst bei Vernachlässigung der Belichtungszeit höchstens zwei Bilder pro Sekunde möglich. Die Nutzung des FF-Sensors zur Erzeugung des "Sucherbilds" erscheint aus diesem Grunde nicht möglich, zumindest nicht für ein farbiges Sucherbild.

Aus der EP 0 129 122 B1 ist eine elektronische Kamera mit einem FF-Sensor bekannt, der speziell zur Erzeugung eines Sucherbildes wie ein FT-Sensor betrieben wird, also wie ein Sensor mit in zwei Hälften aufgeteilter Chipfläche, von denen die eine Hälfte zur Bildaufnahme, die andere Hälfte als Bildspeicher- und Auslesezone dient. Bei der bekannten Kamera wird aber im Gegensatz zu einem normale FT-Sensor weniger als die Hälfte der Chipfläche als Speicherzone verwendet. Grundlage für diesen Kompromiß ist der Umstand, daß für ein Sucherbild im allgemeinen eine wesentlich geringere Auflösung ausreicht als für eine hochwertige Aufnahme. Bei der bekannten Kamera wird die Speicherzone des Chips optisch verdeckt, so daß keine Bildentschmierung erforderlich ist.

Bei digitalen Mittelformat-Kameras, die auf konventionellen Spiegelreflexkameras aufbauend hergestellt werden, verzichtet man aus den obengenannten Gründen auf das "elektronische Sucherbild". Dies ist deshalb möglich, weil ja das Spiegelreflex-Sucherbild zur Verfügung steht. Zwar ist es für eine exakte Fokuseinstellung erforderlich, daß die optische Weglänge zu dem CCD-Sensor genau abgestimmt ist auf die Weglänge zu der Mattscheibe des Suchers, und außerdem kann der CCD-Sensor nicht mehr zur Belichtungsmessung herangezogen werden, für viele Zwecke ist dieser Kompromiß jedoch akzeptierbar.

Bei Großbildkameras, die keinen Spiegelreflex-Strahlengang aufweisen, wird zusätzlich zu dem Objektivverschluß ein weiterer Verschluß vorgesehen, zum Beispiel in Form einer rotierenden Verschluß-Sektorscheibe oder eines Flüssigkristallverschlusses (LC-Verschluß). Eine synchron mit dem Belichtungs- und Auslesevorgang rotierende Verschluß-Sektorscheibe ist mit erheblichem mechanischem Aufwand verbunden, ein LC-Verschluß hat den Nachteil, daß seine polarisierende Wirkung nicht akzeptierbar ist und der LC-Verschluß deshalb vor der eigentlichen Bildaufnahme aus dem Strahlengang herausgeschwenkt werden muß. Um eine Änderung der Fokusebene durch die dann fehlende optische Dicke des LC-Verschlusses zu kompensieren, muß vor der eigentlichen Bildaufnahme eine transparente Glasscheibe entsprechender optischer Dicke in den Strahlengang eingebracht werden. Der gesamte technische Aufwand ist erheblich, wird aber mangels geeigneter Alternative in Kauf genommen.

Wie oben erwähnt, ist für ein manuelles Fokussieren eine möglichst hohe Bildwiederholrate erforderlich. Da bei einer Digitalkamera mit FF-Sensor aufgrund der langen Auslesezeit höchstens zwei Bilder pro Sekunde anfallen, kann man daran denken, das Auslesen des Bildes durch Erhöhen der Taktgeschwindigkeit zu beschleunigen. Das durch die höhere Taktfrequenz verstärkte Bildrauschen ist bei der Erzeugung eines Sucherbildes nicht besonders störend, da es weniger auf die Bildqualität als auf die Geschwindigkeit, das heißt eine hohe Bildwiederholrate ankommt.

Da eine umschaltbare Taktfrequenz für das Auslesen des Bildes beim Erzeugen eines Sucherbildes einerseits und bei der eigentlichen Bildaufnahme andererseits auch die Qualität beim normalen Auslesen beeinträchtigt, und da außerdem die Auslesegeschwindigkeit nur um einen Faktor von etwa "2" gesteigert werden kann, ist diese Lösung nicht vielversprechend.

Als weitere Maßnahme zur Steigerung der Bildwiederholrate kann man den CCD-Sensor über mehrere Kanäle auslesen, das heißt anstatt - wie üblich - nur ein Ausleseregister unter der untersten Zeile des FF-Sensors anzuordnen, könnte man an den vier Ecken des Sensors jeweils eine Ausleseeinrichtung anordnen. Allerdings ist diese Lösung mit einem extrem hohen schaltungstechnischen Aufwand verbunden.

Bevor Maßnahmen zur Steigerung der Bildwiederholrate näher diskutiert werden, soll auf den oben angesprochenen ersten Grund für die Verwendung eines Verschlusses beim Erzeugen eines Sucherbildes näher eingegangen werden, das heißt auf das Verschmieren der Bildinformation.

Da die Ursache der Verschmierung, nämlich das weitere Belichten des Sensors während des Auslesens, gut beschrieben werden kann, ist ein rechnerisches Entschmieren des Bildes möglich, sofern neben der Zeilenzahl (z) des Sensors die Ansteuerparameter Belichtungszeit ($t_B$) und Auslesezeit ($t_A$) genau bekannt sind.

Hier kann man sich den Bildentstehungsvorgang - wie weiter oben schon angedeutet - wie beim Film vorstellen, wobei wir jetzt von der Vorstellung einer Kleinbildkamera mit von links nach rechts durchgezogenem Film abweichen sollten, und anstelle davon aus Gründen der genauen geometrischen Analogie auf das Konzept einer Kinofilmkamera übergehen sollten, bei der der Film von oben nach unten durchgezogen wird. Im Gegensatz zum normalen Kinofilm liefert der CCD-Sensor unmittelbar aneinandergrenzende Einzelbilder, also keine unbelichteten horizontalen Trennungsstege zwischen den Bildern.

Das verwischte Bild hat zwei additiv überlagerte Anteile:

Zum einen den gewünschten, scharfen Anteil $E_S$, der während der Belichtungszeit $t_B$ entsteht, während der der Film ruht:

$$E_S(x,y) = t_B \cdot I(x,y), \tag{1}$$

wobei E für die Lichtenergie steht, I für Bildintensität und x bzw. y die Bildkoordinaten in Zeilenrichtung bzw. Spaltenrichtung bezeichnen.

Zum zweiten entsteht ein verwischter Anteil $E_V$ dadurch, daß der Film während der Transportzeit $t_A$ zwischen zwei aufeinanderfolgenden Belichtungszeiten $t_B$ weiterhin belichtet wird. Da jeder Punkt des Filmes einen Beitrag von allen Punkten der Spalte, in der er sich befindet, erhält (entweder beim Transportvorgang vor oder nach der eigentlichen Belichtung oder bei der eigentlichen Belichtung, je nach seiner Höhe im Bild), ist der verwischte Anteil für alle Punkte einer Spalte gleich groß und ergibt sich aus dem Linienintegral über die Bildintensität längs der jeweiligen Spalte, multipliziert mit der Transportzeit $t_A$ und normiert mit der Bildhöhe h, die der Länge des Linienintegrals entspricht:

$$E_V(x) = t_A \cdot \int I(x,y)dy/h \tag{2}$$

Die additive Überlagerung dieser beiden Anteile ergibt die beobachtete Größe:

$$E(x,y) = E_V(x) + E_s(x,y) \tag{3}$$

Bei einem CCD-Sensor, der im Gegensatz zum Film das Bild ortsdiskret abtastet, tritt eine Summe über k an die Stelle des Integrals über y, und ganzzahlige Bildelementindices i und j ersetzen die reellwertigen Koordinaten x und y:

$$E(i,j) = E_V(i) + E_s(i,j) = t_A \cdot \Sigma\, I(i,k)/z + t_B \cdot I(i,j)$$

$$k = 0 \ldots z-1 \tag{4}$$

Die Anzahl der Zeilen z ersetzt die Bildhöhe h und I(i,j) ergibt sich aus dem Integral der Lichtintensität I(x,y) über den Einzugsbereich des Sensorelements mit den Indices i und j. Der Index der untersten Zeile sei j=0.

Mit Hilfe der Gleichung (4) kann aus dem entstehenden, verwischten Bild E(i,j) die gewünschte unverwischte Bildinformation I(i,j) eindeutig ermittelt werden. Dies ist bekannt aus der US 4 010 319.

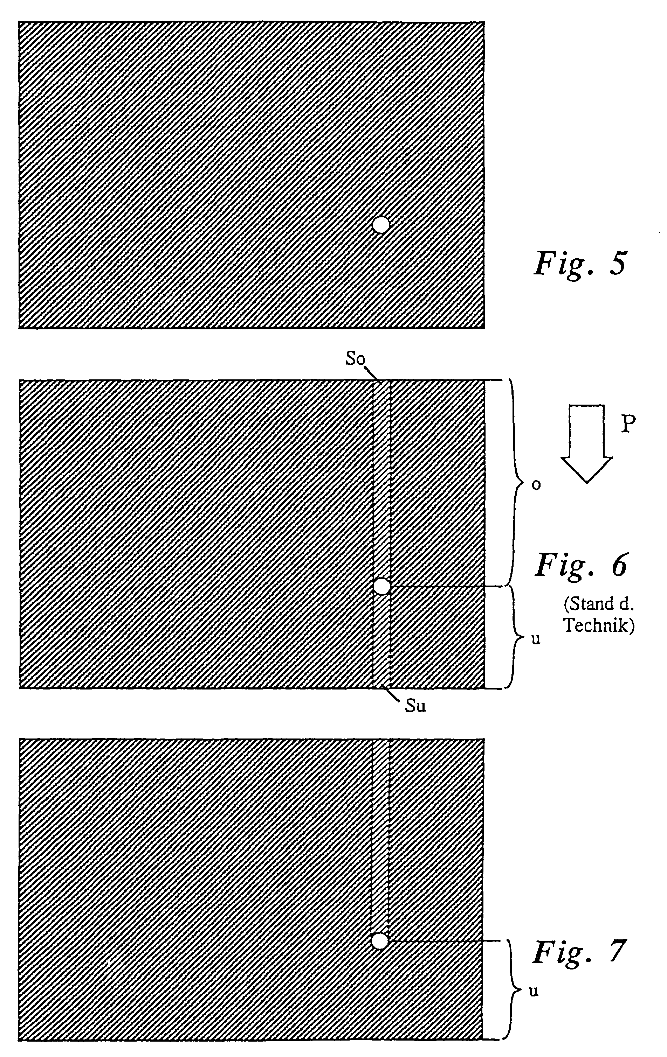

Um das Problem des Verschmierens der Bildinformation zu veranschaulichen, sei auf die Figuren 5 bis 6 Bezug genommen. In Figur 5 ist durch ein Rechteck die bildempfindliche Gesamtfläche des CCD-Sensors angedeutet. An einer bestimmten Stelle werde der CCD-Sensor durch einen hellen Punkt (Kreis) des Objekts belichtet. Beim Auslesen des Bildes (Pfeil P in Figur 6) wird die Information aus den einzelnen Zeilen nach unten in das hier nicht näher dargestellte Ausleseregister geschoben und aus diesem zeilenweise ausgelesen. Bei dem Verschieben der Bildinformation in Spaltenrichtung eines Full-Frame-Transfer-Sensors werden die einzelnen Ladungen aus den Bildwandlerelementen oberhalb des weißen Punkts - unter anderem - dadurch verfälscht, daß bei jedem Passieren der Bildinformation an der durch den weißen Punkt belichteten Stelle zusätzliche Ladung zu der eigentlichen Informationsladung hinzukommt.

Betrachtet man den Ausgangszustand des Sensors, in welchem sämtliche Ladungen gelöscht sind, so wird ausgehend von der Situation gemäß Figur 5 nur die Information unterhalb des weißen Punkts ohne den durch den weißen Punkt verursachten Störanteil in das Ausleseregister gelesen. Die Ladungen aus den Pixeln oberhalb des weißen Punkts werden durch den weißen Punkt verfälscht. Bei dem nächstfolgenden Zyklus Belichten +Auslesen wird nicht nur die Information aus dem Bereich oberhalb des weißen Punkts verfälscht, sondern auch in den Pixeln unterhalb des weißen Punkts befindet sich noch aus dem vorausgegangenen Auslesevorgang die Störinformation. Die gesamte Spalte ist also mit Störinformation von dem einzelnen weißen Punkt behaftet, was in Figur 6 durch So und Su für den oberen Bereich o der Spalte und den unteren Bereich u der Spalte angedeutet ist. In der Praxis setzen sich die Störanteile für jede einzelne betrachtete Spalte aus den Einzel-Störinformationen zusammen, die von der Objekthelligkeit für jedes einzelne Pixel des CCD-Sensors stammen. Da die Störinformation von der Bildinformation abhängt, ist die oben beschriebene Bildentschmierung möglich.

Erforderlich ist eine genaue Kenntnis bzw. Kontrolle der Parameter $t_A$, $t_B$ und z. Dies ist bei freilaufenden Kameras, wie z.B. Videokameras mit fester Bildfrequenz, leicht erreichbar, nicht jedoch so einfach bei Kameras für die digitale Fotografie, bei der Bildeinzug und die Bildverarbeitung unter Anwender- bzw. Applikationskontrolle steht und die Bildrate für das Sucherbild unter anderem davon abhängt, wie schnell der Rechner ist und wie stark er momentan ausgelastet ist.

Wesentlicher Aspekt der vorliegenden Erfindung ist die Bildentschmierung, und zwar in einer gegenüber dem Stand der Technik verbesserten, vorteilhaften Weise. Bevor auf diesen Aspekt der Erfindung näher eingegangen wird, soll noch einmal das Problem der Bildwiederholrate erläutert werden.

Als derzeit praktizierte Maßnahme zur Steigerung der Bildwiederholrate bei FF-Sensoren in Digitalkameras gibt es das sogenannte "Binning". Beim - vertikalen - Binning werden in dem Ausleseregister des FF-Sensors die Ladungen mehrerer übereinanderliegender Bildzeilen spaltenweise elektrisch zusammengefaßt. Dies geschieht durch entsprechende Ansteuerung des Sensors - im Gegensatz zu der normalen Ansteuerung, bei der jede einzelne Zeile für sich in das Ausleseregister übertragen wird, bevor die Information aus dem Ausleseregister sequentiell Pixel für Pixel ausgelesen und digitalisiert wird. Dieses sequentielle horizontale Auslesen der Bildinformation aus dem Ausleseregister ist der zeitbestimmende Faktor bei dem gesamten Auslesevorgang; deshalb läßt sich durch das Binning ein beträchtlicher Geschwindigkeitsgewinn erzielen, abhängig von dem sogenannten Binning-Faktor, der angibt, wie viele übereinderliegende Zeilen jeweils zusammengefaßt werden. Im Normalmodus wäre dieser Binning-Faktor "1". Derzeit realisierte Binning-Faktoren für schnelles Auslesen betragen "2", "4" oder sogar "8". Diese Wahl der Binning-Faktoren steht in Einklang mit der Anzahl von Pixeln pro Spalte, das heißt mit der Zeilenzahl: sowohl die Zeilenzahl typischer FF-Sensoren als auch der Binning-Faktor entsprechen einer glatten Zweierpotenz.

Außer dem vertikalen Binning, also dem gruppenweisen Zusammenfassen mehrerer im Bild in einer Spalte übereinanderliegender Pixel zu einen neuen Bildelement, gibt es noch das horizontale Binning, d.i. das gruppenweise Zusammenfassen von mehreren im Bild nebeneinanderliegenden Bildelementen zu einem neuen Bildelement. Die mit dem Binning einhergehende Verringerung der Auflösung kann deshalb toleriert werden, da für ein Sucherbild nicht die volle Bildauflösung erforderlich ist. Bei einem vertikalen und horizontalen Binning mit einem Binning-Faktor von "4" ergeben 2048 x 2048 Bildwandlerelemente eines FF-Sensors also 512 x 512 Bildelemente des Sucherbildes.

Während eine verringerte Bildauflösung für ein Sucherbild hinnehmbar, wegen der begrenzten Bildschirmgröße für das Sucherbild sogar erwünscht sein kann, stellt der Verlust der Farbe beim "Binning" eine unangenehme Begleiterscheinung dar. Bei CCD-Sensoren mit Farbmosaikmaske geht durch das Zusammenfassen der Ladungen von Bildelementen verschiedener Farben die Farbinformation verloren. Ein farbiges Sucherbild ist aber erwünscht, beispielsweise zu dem Zweck, die Farbtemperatur kontrollieren zu können oder einen Gesamteindruck der Farbkomposition zu erhalten.

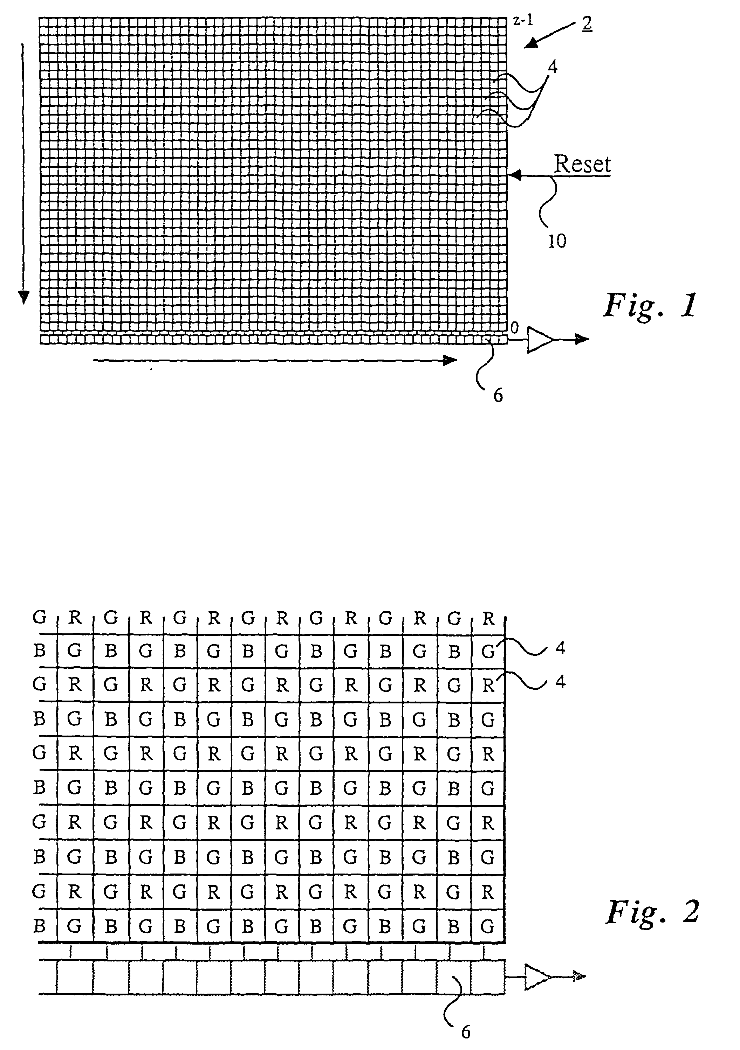

Der Verlust der Farbinformation beim sogenannten Binning soll im folgenden anhand der Figuren 1 und 2 erläutert werden.

Figur 1 zeigt den Aufbau eines typischen FF-Sensors 2 mit einer Matrix aus in Zeilen und Spalten angeordneten, photoelektrischen Bildwandlerelementen 4, wobei sich an die unterste Zeile der lichtempfindlichen Bildwandlerelemente 4 ein Ausleseregister 6 anschließt.

In Figur 2 ist die rechte untere Ecke des in Figur 1 in seiner Gesamtheit dargestellten FF-Sensors 2 dargestellt. Über den einzelnen Bildwandlerelementen entsprechend den einzelnen Pixeln befinden sich Farbfilterelemente für die Farben Grün, Rot und Blau (G, R bzw. B). Die derzeit in der Praxis verwendeten CCD-Bildsensoren mit Farbmaske haben fast ausschließlich den in Figur 2 im Prinzip dargestellten Aufbau. Es handelt sich um die sogenannte Bayer-Farbmaske. Bei dieser Farbmaske sind die auf dem Sensor unmittelbar vor den Bildwandlerelementen befindlichen Farbfilter wie ein Schachbrett angeordnet - die Hälfte der den Sensorelementen entsprechenden Felder, beispielsweise die schwarzen Felder eines Schachbretts, weisen ein grünes Farbfilter auf. Die verbleibenden Felder werden zeilenweise (auch spaltenweise) alternierend mit roten und blauen Farbfiltern versehen, zum Beispiel enthalten sämtliche ungeraden Zeilen rote Farbfilter, sämtliche geraden Zeilen blaue Farbfilter.

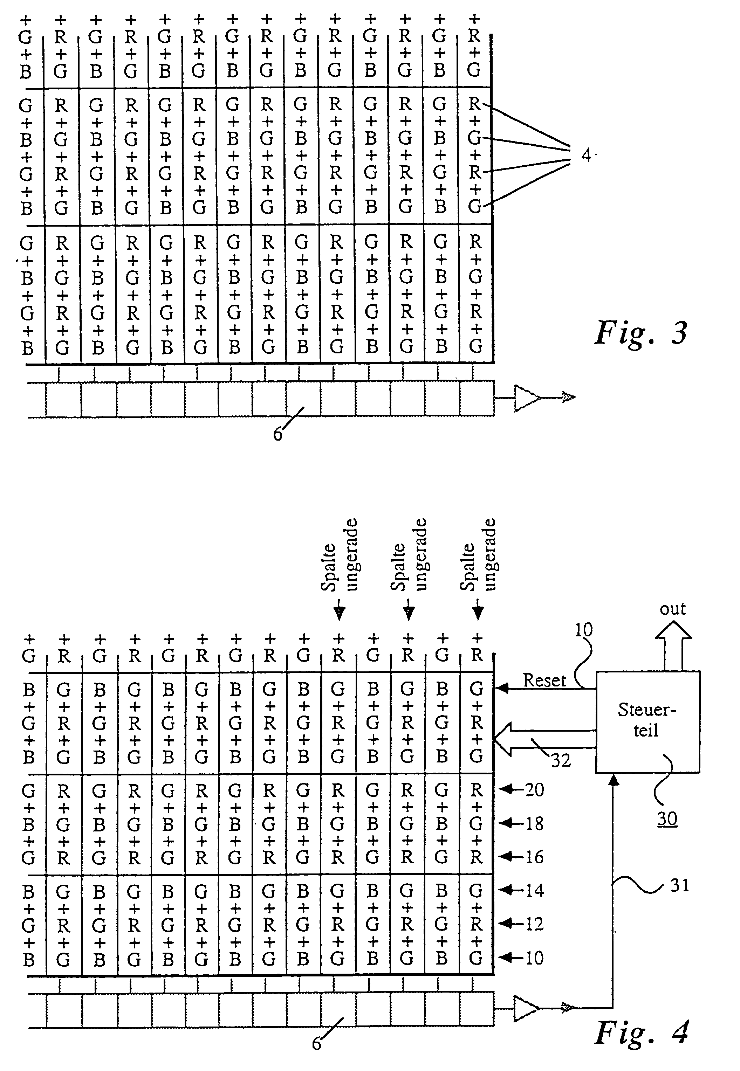

Figur 3 zeigt ein Beispiel für einen Binning-Faktor von "4". Es sind jeweils vier übereinanderliegende Bildelemente 4 zusammengefaßt. Man sieht, daß man durch dieses Binning anstelle von drei verschiedenen Primär-Farbauszügen nur noch zwei verschiedene Misch-Farbauszüge erhält, nämlich zum Beispiel in ungeraden Spalten einen Gelbauszug Ge als Summe von zwei grünen und zwei roten Bildelementen, also Ge = G + R + G + R = 2G + 2R, und in geraden Spalten einen Zyanauszug Cy = B + G + B + G = 2G + 2B aus zwei grünen und zwei blauen Bildelementen. Ein aus drei Komponenten bestehender Farbwert läßt sich aus solchen zwei Farbauszügen nicht mehr ermitteln.

Das oben geschilderte Binning-Verfahren wird derzeit in großem Umfang eingesetzt, da es relativ geringen Schaltungsaufwand erfordert und hohe Bildwiederholraten ermöglicht. Der Verlust der Farbinformation wird als notwendiges Übel in Kauf genommen.

Aus der WO 97/01238 ist ein Verfahren zur Gewinnung eines elektronischen Bildes zur Darstellung auf beispielsweise einem LCD-Bildschirm einer Kamera mit einem flächigen Full-Frame-Transfer-CCD-Sensor bekannt, bei dem ebenfalls ohne Verschluß gearbeitet wird. Zu diesem Zweck wird der CCD-Sensor -durch entsprechende Ansteuerung in ein erstes und ein zweites Segment unterteilt. Das untere Segment dient als Speicher während des Auslesevorgangs, während in dem ersten Segment ein neues Bild aufgenommen und in elektrische Ladungen umgewandelt wird. Wenn die in dem oberen Segment aufgenommene Bildinformation in das untere Segment übertragen wird, werden zwischen jeweils zwei Information enthaltenden Zeilen Leerzeilen gebildet. In diesen Leerzeilen sammelt sich dann während des Transfers vom ersten in das zweite Segment Störinformation, die von der Information in der benachbarten Zeile subtrahiert wird, um die Verschmierungseffekte zu beseitigen. Es wird also jeweils aus einer Information und "Verschmierungs-Information" enthaltenden Zeile die ausschließlich "Verschmierungs-Information" bedeutende Ladung aus der benachbarten Zeile subtrahiert.

Für das Sucherbild steht also nur die Information aus jeder zweiten Zeile des oberen Segments des CCD-Sensors zur Verfügung.

Aus der DE 3 821 705 ist ein Verfahren zur rechnerischen Bildentschmierung mittels Rekursion bei einer nach dem Frame-Transfer-Prinzip arbeitenden Videokamera bekannt.

Der Erfindung liegt die Aufgabe zugrunde, ein Verfahren zur Gewinnung eines elektronischen Sucherbildes für eine digitale Stehbildkamera mit einem flächigen Full-Frame-Transfer-CCD-Sensor anzugeben, mit dem ohne Verwendung eines speziellen Verschlusses ein zur Vornahme der Einstellarbeiten geeignetes Sucherbild aus der von dem CCD-Sensor gelieferten Information erzeugbar ist.

Diese Aufgabe wird erfindungsgemäß in Übereinstimmung mit dem Anspruch 1 dadurch gelöst, daß vor Beginn jeder mit der gesamten bildempfindlichen Fläche des CCD-Sensors vorgenommenen Sucherbildaufnahme auf den CCD-Sensor ein elektronischer Löschimpuls (Reset-Impuls) gegeben wird, und eine Bildentschmierung auf rechnerischem Weg mittels einer Rekursionsformel durchgeführt wird. Desweiteren wird eine Stehbildkamera zur Durchführen des erfindungsgemäßen Verfahrens in Anspruch 5 angegeben.

Viele moderne CCD-Sensoren verfügen über eine sog. Reset-Leitung, mit der alle bislang in den Sensorelementen akkumulierten Ladungspakete gleichzeitig gelöscht werden können (Fig. 1).

Die Erfindung stützt sich auf die Verwendung dieser Reset- oder Lösch-Leitung: Unabhängig von der Belichtungs-Vorgeschichte des Sensors

wird, nach Anforderung eines neuen Bildes, der Sensor durch Anlegen des Reset-Signals vor der Belichtungszeit $t_B$ gelöscht. In der Analogie zur Kinofilmkamera würde dies bedeuten, daß während des Hereinziehens eines neuen Filmstückchens der Film nicht belichtet wird oder der Film anderweitig erst im Augenblick, in dem er zur Ruhe kommt, "aktiviert" wird.

Verwischungsanteile entstehen nun bloß noch beim Herausziehen des Filmes bzw. beim Auslesen des Sensors; somit gar keine Anteile am unteren Bildrand (er wird ja unmittelbar nach $t_B$ ausgewertet) und am meisten Anteile am oberen Bildrand, der das ganze Bild nach unten überstreichen muß, bevor er zum Auslesen ansteht. Die Gleichung für das entstehende Bild lautet nun:

$$E(i,j) = E_v(i,j) + E_s(i,j) = t_A \, \Sigma \, I(i,k)/z + t_B \cdot I(i,j)$$

$$k=0 \ldots j\text{-}1 \tag{5}$$

Der Unterschied zur Gleichung (4) ist, daß die Summe nur noch für die Zeilen von 0 bis j-1 gebildet wird und nicht mehr über alle Zeilen von 0 bis z-1. Es tragen also nur noch Bildintensitäten I(i,k) zur Verwischung bei, die unterhalb des beobachteten Bildelements liegen.

Die Gleichung (5) läßt sich leicht nach der gewünschten Bildinformation I(i, j) auflösen, wobei allerdings anstelle der für die Auflösung von Gleichung (4) erforderlichen Summenbildung über E(i,j) eine Rekursionsformel tritt. Es gilt:

$$t_B \cdot I(i,0) = E(i,0) \qquad \text{für die unterste (nullte) Zeile} \qquad (6)$$

$$t_B \cdot I(i,j) = (t_B - t_A/z) \cdot I(i,j\text{-}1) + E(i,j) - E(i,j\text{-}1)$$

$$\text{für } j > 0 \qquad (7)$$

Die gewünschte Bildinformation I(i, j) läßt sich mit Hilfe der oben angegebenen Formel gewinnen.

Ein wesentlicher Vorteil, gemäß der obigen Rekursionsformel zu arbeiten, besteht darin, daß die Verwischanteile des Bildes im Mittel nur noch halb so groß sind; denn die Summe der die Verwischanteile enthaltenden Bildinformation wird nur noch für die Zeilen unterhalb der jeweils betrachteten Zeile gebildet, die darüberliegenden Zeilen können unberücksichtigt bleiben. Während im Stand der Technik die Verwischanteile aus sämtlichen Zeilen des Bildes berücksichtigt wurden, brauchen erfindungsgemäß nur noch die Informationen berücksichtigt zu werden, die bis zu der gerade interessierenden Zeile angefallen sind. Das rechnerische Entschmieren des Bildes kann bereits beim Eintreffen der ersten Zeilen von der Kamera durchgeführt werden, die Rekursion stützt sich nur auf die vorhergegangenen Werte. Da man im Stand der Technik zur Lösung der obigen Gleichung (4) erst die gesamte Information über die kompletten Spalten zur Verfügung haben muß, kann man mit der Entschmier-Berechnung erst nach Abschluß des Auslesevorgangs beginnen. Bei dem erfindungsgemäßen Verfahren kann die Entschmier-Berechnung im wesentlichen schritthaltend mit dem Anfall der Bilddaten am Ausgang des Ausleseregisters durchgeführt werden.

Da bei kurzen Belichtungszeiten $t_B$ und bei langen Auslesezeiten $t_A$ kleine Differenzen großer Zahlen gebildet werden müssen, hat eine Halbierung des Verwischanteils der Bildinformation Vorteile für die Stabilität und den Signal/Rausch-Abstand.

Der hier beschriebene erste Aspekt der Erfindung ("Bildentschmierung") läßt sich in vorteilhafter Weise kombinieren mit einem zweiten Aspekt ("Binning").

In einer Weiterbildung des erfindungsgemäßen Verfahrens ist vorgesehen, die Ladungen aus einer eine vorgegebene Anzahl von Pixeln umfassenden Gruppe spaltenweise zusammenzufassen, um ein Pixelgruppensignal entsprechend der Summe der Ladungen aus den zu einer Gruppe gehörigen Pixeln zu bilden ("Binning"), wobei insbesondere in Verbindung mit einem Farb-CCD-Sensor die vorgegebene Anzahl von Pixeln einer Gruppe (Binning-Faktor ungerade, zum Beispiel 3, 5, 7, ...) ist, um dann aus mehreren Pixelgruppensignalen jeweils rechnerisch die einzelnen Farbkomponenten (G, B, R) zu gewinnen, die zu den entsprechenden Pixelgruppen gehören.

In dieser speziellen Ausgestaltung der Erfindung, wird von dem konventionellen Binning-Verfahren, welches geradzahlige Binning-Faktoren verwendet, abgewichen, und stattdessen werden ungeradzahlige Binning-Faktoren verwendet.

Wie im folgenden ausgeführt werden wird, kann man durch diese Maßnahme die Farbinformation aus den Pixelgruppensignalen rechnerisch zurückgewinnen.

Bei ungeradzahligen Binning-Faktoren in Verbindung mit der oben näher beschriebenen Bayer-Farbmaske erhält man nämlich nicht nur zwei, sondern vier, allerdings nur leicht unterschiedliche Farbauszüge. Aus diesen vier Farbauszügen lassen sich rechnerisch die Farbinformationen für G, R und B zurückgewinnen.

Das Binning erfolgt in dem Stand der Technik entsprechender Weise durch geeignete Ansteuerung des CCD-Sensors. Anstatt die Ladung aus den Spalten zeilenweise in das Ausleseregister einzutakten, um nach jedem Zeilentakt den Zeileninhalt aus dem Ausleseregister auszulesen, erfolgen direkt hintereinander drei oder fünf Vertikal-Auslesetakte, so daß sich in den zu den einzelnen Spalten gehörigen Stellen des Ausleseregisters die Ladung aus drei bzw. fünf darüberliegenden Zeilen akkumuliert. Die Bildentschmierung gemäß der Erfindung erfolgt in der oben angegebenen Weise, wobei man sich ein einzelnes Pixel einfach als Pixelgruppe vorzustellen hat, die statt einem einzigen Pixel dann drei bzw. fünf oder noch mehr Pixel enthält. Bei einem "Binning-Faktor" von "3" hätte der CCD-Sensor dann nur ein Drittel so viel Zeilen wie ohne "Binning".

Man kann die Rekursionsformel abhängig von dem Binning-Faktor k auch umschreiben unter Verwendung von drei neuen Variablen j'=j/k, z'=z/k und $t_A'=t_A/k$:

$$t_B \cdot I(i,0) = E(i,0) \qquad (8)$$

$$t_B \bullet I(i,j') = (t_B - t_A'/z') \bullet I(i,j'-1) + E(i,j') - E(i,j'-1) \qquad (9)$$

Durch die erfindungsgemäßen Maßnahmen und deren Weiterbildungen wird erreicht, daß auch bei Fachkameras mit einem FF-Sensor ohne Verwendung eines zusätzlichen Verschlusses, etwa eines schwenkbaren LC-Verschlusses oder einer rotierenden Sektorscheibe im Strahlengang, ein Sucherbild mit hoher Bildwiederholrate und mit der nützlichen Farbinformation erzeugt werden kann. Die Erzeugung eines hochqualitativen Sucherbildes in einer professionellen Digitalkamera mit einem CCD-Sensor, der mehr als 4 Mio. Bildelemente aufweist, ohne das Erfordernis, einen separaten Verschluß vorzusehen, bedeutet bei derartigen Kameras eine Einsparung von etwa 5000 Euro, bezogen auf den Endpreis der Profikamera.

Bei Mittelformat-Kameras, die auf Spiegelreflexkameras aufbauen, ist nun eine direkte elektronische Kontrolle des Bildes möglich (der Spiegel kann entfernt werden oder bleibt bei der Betrachtung des Sucherbildes aus dem Strahlengang herausgeschwenkt). Ein wesentlicher Vorteil, der sich für Mittelformat-Kameras ergibt, besteht in der Aufrüstbarkeit solcher Kameras auf Eigenschaften typischer Fachkameras: wenn man den CCD-Sensor in der Bildebene neig- oder schwenkbar lagert, ergeben sich die für Fachkameras typischen Einstellmöglichkeiten (Scheinflug-Schärfeneinstellung, perspektivischer Ausgleich stürzender Linien). Für solche Einstellungen ist die Kontrolle des Sucherbilds erforderlich, wie es in der Bildebene des Sensors entsteht.

Im folgenden werden Ausführungsbeispiele der Erfindung anhand der Zeichnung näher erläutert. Es zeigen:

Figuren 1, 2 und 3 schematische Ansichten eines Full-Frame-Transfer-CCD-Sensors zur Erläuterung des erfindungsgemäßen Verfahrens,

Figur 4 eine schematische Darstellung des unteren rechten Eckbereichs eines CCD-Sensors des in den Figuren 1 bis 3 dargestellten Typs mit einer schematischen Skizzierung von Pixelgruppen mit jeweils drei zu einer Gruppe zusammengefaßten Pixeln entsprechend dem erfindungsgemäßen Verfahren, und

Figur 5 bis 7 schematische Skizzen zum Veranschaulichen der Bildverschmierung.

Schematisch dargestellt ist ein Steuerteil 30, der sowohl zur Ansteuerung des Sensors 2 über eine Steuerleitung 32 und eine Lösch- oder Reset-Leitung 10 als auch zur Verarbeitung der aus dem Ausleseregister 6 über eine Leitung 31 kommenden Bildinformation dient.

Zunächst soll das "Binning" anhand der Figur 4 näher erläutert werden. Das im folgenden beschriebene "vertikale Binning" ist das gruppenweise Zusammenfassen der Information aus mehreren Pixeln des CCD-Sensors. Das Steuerteil 30 taktet den CCD-Sensor in der Weise, daß in rascher Folge die Information aus drei übereinanderliegenden Zeilen in das Ausleseregister 6 gelangen und dort akkumuliert werden.

Gemäß Figur 4 soll hier das erfindungsgemäße Verfahren des Zusammenfassens mehrerer Ladungen aus einer Gruppe von Pixeln für einen Binning-Faktor von 3 erläutert werden.

Beim Zusammenfassen der ersten, unteren drei Zeilen 10, 12 und 14 entsteht in den ungeradzahligen Spalten ein grünliches Gelb, nämlich $Ge_G = G + R + G = 2G + R$ und in den geradzahligen Spalten ein bläuliches Cyan, nämlich $Cy_B = B + G + B = G + 2B$. Beim Zusammenfassen der nächsten drei Zeilen 16, 18 und 20 entsteht hingegen ein rötliches Gelb, nämlich $Ge_R = R + G + R = G + 2R$ und in den geradzahligen Spalten ein grünliches Cyan, nämlich $Cy_G = G + B + G = 2G + B$. Beim Zusammenfassen der dritten drei Zeilen (oben in Figur 4) ergeben sich wieder die gleichen Verhältnisse wie bei den ersten drei Zeilen. Aus den vier Farbauszügen $Ge_G$, $Ge_R$, $Cy_B$ und $Cy_G$ lassen sich nun die Original-Farbauszüge R, G und B wieder zurückrechnen:

$$R = (2Ge_R - Ge_G)/3 = (2G + 4R - 2G - R)/3 = 3R/3$$

$$B = (2Cy_B - Cy_G)/3 = (2G + 4B - 2G - B)/3 = 3B/3$$

$$G = (2Ge_G - Ge_R + 2Cy_G - Cy_B)/6$$

$$= (4G + 2R - G - 2R + 4G + 2B - G - 2B) = 6G/6$$

Diese Methode läßt sich analog auch für größere ungeradzahlige Binningfaktoren anwenden, wobei allerdings zu berücksichtigen ist, daß das Nutzfarbsignal im Verhältnis zum Summensignal immer schwächer wird und damit das Verfahren aufgrund der dann erforderlichen Bildung kleiner Differenzen großer Zahlen immer empfindlicher gegenüber Störungen wird.

Ein Binningfaktor von fünf ergab im Experiment noch sehr gute Resultate, bedingt durch die hohe Linearität und das geringe Rauschen der von uns entwickelten Kameraelektronik. Bei diesem Experiment wurde zusätzlich das dem ersten Aspekt der Erfindung entsprechende Bildentschmier- oder Entwischungsverfahren vorgeschaltet, bei einer Belichtungszeit $t_B$ = 10msec und einer Auslesezeit $t'_A$ = 500msec/5 = 100msec, also eigentlich extrem ungünstigen Verhältnissen (der Divisor 5, der die Auslesezeit $t_A$ reduziert, resultiert aus dem Binningfaktor 5).

Nach dem "Binning" durch entsprechende Taktung des CCD-Sensors für jeweils drei übereinanderliegende Zeilen (Binning-Faktor = 3) erfolgt in dem Steuerteil 30 die Bildentschmierung mittels Rekursionsformel. Schritthaltend mit dem Auslesen des CCD-Sensors erfolgt die Entschmierung gemäß folgender Rekursionsformel für einen Binning-Faktor k gemäß den bereits oben angegebenen Gleichungen (8) und (9):

$$t_B \cdot I(i,0) = E(i,0) \qquad\qquad (8)$$

$$t_B \cdot I(i,j') = (t_B - t_A'/z') \cdot I(i,j'-1) + E(i,j') - E(i,j'-1) \qquad\qquad (9)$$

wobei

$j'$ =      $j/k$; $z'$ = $z/k$; $t_A'$ = $t_A/k$;
$I(i,j)$=      Bildinformation für das Pixel in der Spalte i und der Zeile j;
$t_B$ =      Belichtungszeit;
$t_A$ =      Auslesezeit des CCD-Sensors;
$z$ =      Anzahl der Zeilen des CCD-Sensors ($0 \le j \le z-1$); und
$E(i,j)$=      Ladungsmenge (= Lichtenergie), die für das ausgelesene Pixel (i,j) während der Belichtungszeit $t_B$ und der Auslesezeit $t_A$ anfällt.

Durch die Bildentschmierung wird nach dem Auslesen der untersten Zeile oder Zeilengruppe mit Hilfe der oben angegebenen Formel (8) die Bildinformation für die unterste Zeile bzw. Zeilengruppe gewonnen, für die dann anschließenden Zeilen erfolgt die Gewinnung der Bildinformation in der korrigierten oder entschmierten Fassung gemäß der obigen Formel (9) bzw. in der nach I(i,j) aufgelösten Version dieser Formel.

Die gesamte Verarbeitung zur Bildentschmierung und der Farbrückgewinnung erfolgt erfindungsgemäß durch Programme in der in Figur 4 dargestellten Rechnereinheit, wobei die Taktfrequenz der Rechnereinheit so hoch ist, daß die durch die Rechenschritte veranlaßten Verzögerungen vernachlässigbar sind gegenüber den Zykluszeiten beim Belichten und beim Auslesen der Bildinformation.

Der Vorteil der erfindungsgemäßen, mittels Rekursionsformel und unter Ausnutzung des Reset-Eingangs des CCD-Sensors erfolgenden Bildentschmierung gegenüber dem Stand der Technik ergibt sich aus Figur 7. Durch den Lösch- oder Reset-Impuls wird die Vorgeschichte des Sensors direkt vor der Belichtung ausgeblendet. Während im Stand der Technik die Verwischanteile aus sämtlichen Zeilen der Spalte berücksichtigt werden mußten (gemäß Figur 6 für die gesamte Spalte mit ihren Anteilen So und Su), können erfindungsgemäß die über dem jeweils betrachteten Punkt befindlichen Zeilen unberücksichtigt bleiben.

In Figur 7 bleibt der Störanteil, der durch den hellen Punkt verursacht wird, beim Auslesen des unteren Bereichs "u" völlig unberücksichtigt, da die betreffende Störinformation in den Zeilen unterhalb dieses Punkts nicht in der Gesamtinformation der Spalte enthalten ist. Für die Zeilen oberhalb des hellen Punkts wird dann die durch den hellen Punkt hervorgerufene Störinformation in jeder Zeile berücksichtigt. Der Vorteil besteht darin, daß mit der Bildentschmierung sofort mit dem Auslesen der untersten Zeile begonnen werden kann. Wenn die Zeile entsprechend dem hellen Bildpunkt zum Auslesen ansteht, wird die Störinformation berücksichtigt, genauso wie in den dann nach oben anschließenden Zeilen.

Ein wesentlicher Vorteil der Nutzung der RESET-Impulse ist die (um einen Faktor 2) erhöhte Übersteuerungsfestigkeit des Sensors.

**Patentansprüche**

**1.** Verfahren zur Gewinnung eines elektronischen Sucherbildes für eine digitale Stehbildkamera mit einem flächigen Full-Frame-Transfer-CCD-Sensor, der eine Matrix aus in Zeilen und Spalten angeordneten photoelektrischen Bildwandlerelementen (4) aufweist, die einzelnen Pixeln entsprechen, wobei am Rand ein Ausgaberegister (6) angeordnet ist, in das hinein im Anschluß an eine Bildaufnahme-Belichtungszeit ($t_B$) die Ladungen aus den Bildwandlerelementen der Spalten sequentiell hineingeschoben werden, und aus dem die Ladungen zeilenweise ausgelesen werden, mit folgenden Merkmalen:

- vor Beginn jeder mit der gesamten bildempfindlichen Fläche des CCD-Sensors vorgenommenen Sucherbildaufnahme wird auf den CCD-Sensor (2) ein elektronischer Löschimpuls (10) gegeben, und

- es erfolgt eine Bildentschmierung auf rechnerischem Weg mittels Rekursionsformel.

2. Verfahren nach Anspruch 1, **dadurch gekennzeichnet, daß** für jede Spalte i und jede Zeile j entsprechend folgender Rekursionsformel ein Wert I(i,j) der Bildinformation des Pixels (i,j) errechnet wird:

$$t_B \bullet I(i,0) = E(i,0) \tag{8}$$

$$t_B \bullet I(i,j') = (t_B - t_A'/z') \bullet I(i,j'-1) + E(i,j') - E(i,j'-1) \tag{9}$$

wobei

| | |
|---|---|
| j' = | j/k; z'= z/k; $t_A'$ = $t_A$/k; |
| I(i,j)= | Bildinformation für das Pixel in der Spalte i und der Zeile j; |
| $t_B$ = | Belichtungszeit; |
| $t_A$ = | Auslesezeit des CCD-Sensors; |
| z = | Anzahl der Zeilen des CCD-Sensors ($0 \leq j \leq z-1$); und |
| E(i,j) = | Ladungsmenge (= Lichtenergie), die für das ausgelesene Pixel (i,j) während der Belichtungszeit $t_B$ und der Auslesezeit $t_A$ anfällt, |
| k = | Binning-Faktor (1, 2, 3, ...). |

3. Verfahren nach Anspruch 1 oder 2, **gekennzeichnet durch** folgendes Merkmal:

es werden spaltenweise die Ladungen aus einer eine vorgegebene Anzahl von Pixeln umfassenden Gruppe zusammengefaßt, um ein Pixelgruppensignal entsprechend der Summe der Ladungen aus den zu einer Gruppe gehörigen Pixeln zu bilden ("Binning", mit Binning-Faktor k > 1).

4. Verfahren nach Anspruch 3 in Verbindung mit einem Farb-CCD-Sensor (2), der eine konventionelle Farbmosaikmaske aufweist, wobei die vorgegebene Anzahl von Pixeln einer Gruppe ("Binning-Faktor") ungerade (zum Beispiel 3, 5, 7, ...) ist, und wobei aus mehreren Pixelgruppensignalen jeweils rechnerisch die einzelnen Farbkomponenten (G, B, R) gewonnen werden, die zu den entsprechenden Pixelgruppen gehören.

5. Stehbildkamera mit einem flächigen Full-Frame-Transfer-CCD-Sensor, der eine Matrix aus in Zeilen und Spalten angeordneten photoelektrischen Bildwandlerelementen (4) aufweist, die einzelnen Pixeln entsprechen, wobei am Rand des Sensors ein Ausgaberegister (6) angeordnet ist, in das hinein im Anschluß an eine Bildaufnahme-Belichtungszeit die Ladungen aus den Bildwandlerelementen (4) der Spalten sequentiell hineingeschoben werden, und aus dem die Ladungen zeilenweise ausgelesen werden, und mit einer Einrichtung zum Gewinnen eines Sucherbildes, **dadurch gekennzeichnet, daß** ein elektronischer Löschimpulsgeber (10) vorgesehen ist, der vor Beginn jeder mit der gesamten bildempfindlichen Fläche des CCD-Sensors vorgenommenen Sucherbildaufnahme einen Löschimpuls auf den CCD-Sensor gibt, und daß unter Verzicht auf einen Sucherbildverschluß eine Steuereinrichtung vorgesehen ist, die eine Bildentschmierung auf rechnerischem Weg mittels Rekursionsformel durchführt.

6. Digitalkamera nach Anspruch 5, **dadurch gekennzeichnet, daß** der CCD-Sensor in der Bildebene neig- und/oder schwenkbar gelagert ist.

**Claims**

1. A method for obtaining an electronic viewfinder image for a digital still camera with a two-dimensional full frame transfer CCD sensor having a matrix of photoelectric image converter elements (4) disposed in rows and columns and corresponding to individual pixels, and disposed at the edge an output register (6) into which the charges from the image converter elements of the columns are shifted sequentially subsequent to an image recording exposure time ($t_B$), and out of which the charges are read row by row, having the following features:

   - an electronic erasing pulse (10) is supplied to the CCD sensor (2) before the onset of each viewfinder image capture made with the total image-sensitive area of the CCD sensor, and
   - image desmearing is effected by calculation by means of a recursion formula.

2. A method according to claim 1, **characterized in that** a value $I(i,j)$ of the image information of the pixel $(i,j)$ is calculated for each column $i$ and each row $j$ accordingly to the following recursion formula:

$$t_B \bullet I(i,0) = E(i,0) \tag{8}$$

$$t_B \bullet I(i,j') = t_B - t_A'/z') \bullet I(i,j'-1) + E(i,j') = E(i,j'-1) \tag{9}$$

   where

   | | |
   |---|---|
   | $j' =$ | $j/k$; $z' = z/k$; $t_A' = t_A/k$; |
   | $I(i,j) =$ | image information for pixel in column $i$ and row $j$; |
   | $t_B =$ | exposure time; |
   | $t_A =$ | readout time of CCD sensor; |
   | $z =$ | number of rows of CCD sensor ($0 \leq j \leq z-1$); |
   | $E(i,j) =$ | quantity of charge (= light energy) obtained for read-out pixel $(i,j)$ during exposure time $t_B$ and readout time $t_A$; and |
   | $k =$ | binning factor (1, 2, 3,...). |

3. A method according to claim 1 or 2, **characterized by** the following feature:

   - the charges from a group comprising a given number of pixels are summed together column by column to form a pixel group signal corresponding to the sum of the charges from the pixels belonging to a group (binning with binning factor $k > 1$).

4. A method according to claim 3 in conjunction with a color CCD sensor (2) having a conventional color mosaic mask, the given number of pixels of a group (binning factor) being odd (for example 3, 5, 7,...), and the individual color components ($G$, $B$, $R$) belonging to the corresponding pixel groups being obtained by calculation from several pixel group signals in each case.

5. A still camera having a two-dimensional full frame transfer CCD sensor having a matrix of photoelectric image converter elements (4) disposed in rows and columns and corresponding to individual pixels, and disposed at the edge of the sensor an output register (6) into which the charges from the image converter elements (4) of the columns are shifted sequentially subsequent to an image recording exposure time, and out of which the charges are read row by row, and having means for obtaining a viewfinder image, **characterized in that** an electronic erasing pulse emitter (10) is provided which supplies an erasing pulse to the CCD sensor before the onset of each viewfinder image capture made with the total image-sensitive area of the CCD sensor, and a control device is provided which performs image desmearing by calculation by means of a recursion formula, without the use of a viewfinder image shutter.

6. A digital camera according to claim 5, **characterized in that** the CCD sensor is mounted in inclinable and/or swiveling fashion in the image plane.

**EP 1 033 869 B1**

**Revendications**

1. Procédé d'acquisition d'une image électronique de viseur pour un appareil photographique numérique comportant un capteur à couplage de charge surfacique à transfert plein cadre, qui présenté une matrice d'éléments convertisseurs d'image photoélectrique (4) disposés en lignes et colonnes, qui correspondent à des pixels séparés, un registre d'émission (6) étant disposé en bordure, dans lequel, à la suite d'un temps ($t_B$) d'exposition de prise de vue, les charges des éléments convertisseurs d'image des colonnes sont insérées de manière séquentielle, et à partir duquel les charges sont lues ligne par ligne, présentant les caractéristiques suivantes :

   - avant le début de chaque prise de vue de viseur réalisée avec la surface photosensible totale du capteur à couplage de charge, une impulsion électronique d'effacement (10) est donnée au capteur à couplage de charge (2), et

   - il s'opère, par calcul, un désempâtage d'image au . moyen d'une formule de récurrence.

2. Procédé selon la revendication 1, **caractérisé en ce que** pour chaque colonne i et chaque ligne j, une valeur I(i, j) de l'information d'image du pixel (i,j) est calculée suivant la formule de récurrence ci-après :

$$t_B \cdot I(i,0) = E(i,0) \qquad (8)$$

$$t_B \, I(i,j') = (t_B - t_A'/Z') \cdot I(i,j'-1) + E(i,j') - E(i,j'-1) \qquad (9)$$

   où

   $j'$ = $j/k$ ; $z' = z/k$ ; $t_A' = t_A/k$ ;
   $I(i,j)$ = information d'image pour le pixel de la colonne i et de la ligne j ;
   $t_B$ = temps d'exposition ;
   $t_A$ = temps de lecture du capteur à couplage de charge ;
   $z$ = nombre de lignes du capteur à couplage de charge ($0 \leq j \leq z-1$) ; et
   $E(i,j)$ = quantité de charge (= énergie lumineuse) incidente pour le pixel lu (i,j) pendant le temps d'exposition $t_B$ et le temps de lecture $t_A$,
   $k$ = facteur binning (1, 2, 3 ...)

3. Procédé selon la revendication 1 ou 2, **caractérisé par** la particularité suivante :

   colonne par colonne, les charges d'un groupe d'un nombre donné de pixels sont réunies pour former un signal de groupe de pixels correspondant à la somme des charges émanant des pixels appartenant à un groupe (fonction "binning", avec facteur binning k > 1).

4. Procédé selon la revendication 3 en liaison avec un capteur à couplage de charge couleur (2), qui comporte un masque de mosaïques de couleurs classique, dans lequel le nombre donné de pixels d'un groupe ("facteur binning") est impair (par exemple 3, 5, 7, ...), et dans lequel, à partir de plusieurs signaux de groupes de pixels, sont obtenues à chaque fois par le calcul les composantes de couleurs séparées (V, B, R), qui appartiennent aux groupes de pixels correspondants.

5. Appareil photographique comportant un capteur à couplage de charge surfacique à transfert plein cadre, qui présente une matrice d'éléments convertisseurs d'image photoélectrique (4) disposés en lignes et colonnes, qui correspondent à des pixels séparés, un registre d'émission (6) étant disposé en bordure, dans lequel, à la suite d'un temps ($t_B$) d'exposition de prise de vue, les charges des éléments convertisseurs d'image des colonnes sont insérées de manière séquentielle, et à partir duquel les charges sont lues ligne par ligne, et comportant un dispositif d'acquisition d'une image de viseur, **caractérisée en ce qu'**est prévu un générateur d'impulsions d'effacement (10), qui avant le début de chaque prise de vue de viseur réalisée avec la surface photosensible totale du capteur à couplage de charge donne une impulsion électronique d'effacement au capteur à couplage de charge, et que, en l'absence d'une obturation d'image de viseur, est prévu un dispositif de commande, qui exécute par calcul un désempâtage d'image au moyen d'une formule de récurrence.

6. Appareil photographique numérique selon la revendication 5, **caractérisé en ce que** le capteur à couplage de charge est monté inclinable et/ou pivotant dans le plan de l'image.

EP 1 033 869 B1

Fig. 1

Fig. 2

14

*Fig. 3*

4

6

Spalte ungerade  Spalte ungerade  Spalte ungerade

out

10

Reset

Steuer-teil

32

30

←20
←18
←16
←14
←12
←10

31

6

*Fig. 4*

*Fig. 5*

*Fig. 6*

(Stand d. Technik)

*Fig. 7*